# EUROPEAN PATENT APPLICATION

(11) **EP 1 906 300 A2**
(43) Date of publication of application: **02.04.2008**
(21) Application number: 07113467.0
(22) Date of filing: 30.07.2007
(51) Int. Cl.: G06F 3/06

(54) **Information leak-preventing apparatus, and information leak-preventing method**

(30) Priority: 28.09.2006 JP 2006265889
(71) Applicant: Fujitsu Ltd., Kawasaki-shi, Kanagawa 211-8588 (JP)
(72) Inventor: Kadowaki, Yoshinori, c/o Yamagata Fujitsu Limited, Oaza Higashine, Higashine-shi, Kanagawa 999-3701 (JP); Suzuki, Hisato, c/o Yamagata Fujitsu Limited, Higashine-shi, Yamagata 999-3701 (JP); Harimoto, Nobuaki, c/o Fujitsu Limited, Kawasaki-shi, Kanagawa 211-8588 (JP); Haga, Kimiaki, c/o Fujitsu Limited, Kawasaki-shi, Kanagawa 211-8588 (JP)
(74) Representative: Cooper-Rolfe, Elizabeth Louise

(57) **Abstract**

A command processing unit outputs a format command to an HDD. While the HDD is being formatted, a format-error causing unit outputs a reset command to the HDD. The reset command causes abnormal end of the formatting of the HDD, which makes reading of data from the HDD impossible.

## Description

### BACKGROUND OF THE INVENTION

### 1. Field of the Invention

The present invention generally relates to a technology for preventing leakage of information from a storage medium.

### 2. Description of the Related Art

In recent years, it is often the case that confidential industrial or personal information is stored in various storage media, such as a hard disk drive (HDD). Therefore, it has become inevitable to prevent leakage of information from the storage media. There is a real need for an arrangement, whereby a third person is unable to read data stored in a storage medium, when the storage medium is disposed or is sent for repair.

Initialization (formatting) or overwriting meaningless data is effective in making data, stored in the storage medium, unreadable. However, time required for formatting or overwriting varies significantly depending on volume or on writing speed of the storage medium. For example, in magnetic devices such as HDD, time required for overall overwriting is about 1 hr/100 GB.

Furthermore, ever increasing capacity of the storage medium is likely to increase the time required for formatting and overwriting.

Japanese Patent Application Laid-Open No. 2006-59025 discloses a technology that uses a lock function for reducing time required for a task of making storage medium data unreadable, by using a password of the storage medium.

Some storage media have a lock function that uses a password as that used by an HDD connected to a computer with an integrated Drive Electronics (IDE). In such storage media, it is possible to make data unreadable by a third person, in a short period of time, by using available technology. However, the conventional technology mentioned above is not suitable for a storage medium that does not have a function of limiting data reading as that of an HDD connected to a computer with a small computer system interface (SCSI). In such a case, format or overwriting with meaningless data is necessary, which requires considerable amount of time for the task of ensuring confidentiality of the data.

Therefore, there is a need for a technology for making data in the storage medium unreadable in a short period of time, without depending on functions of the storage medium.

### SUMMARY OF THE INVENTION

It is desirable to at least partially solve the problems in the conventional technology.

According to an aspect of the present invention, an information leak-preventing apparatus that prevents leakage of information from a storage medium includes a formatting unit that formats the storage medium; and an error causing unit that causes a format error in the storage medium while the formatting unit is formatting the storage medium.

According to another aspect of the present invention, a method of preventing leakage of information from a storage medium includes formatting the storage medium; and causing a format error in the storage medium while the storage medium in being formatted at the formatting.

The above and other features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic block diagram for explaining an outline and configuration of an information leak-preventing apparatus according to an embodiment of the present invention;
Fig. 2 is an exterior view of the information leak-preventing apparatus;
Fig. 3 is a flowchart for explaining a process performed by the information leak-preventing apparatus for causing a format error in an HDD by outputting a reset command to the HDD; and
Fig. 4 is a flowchart for explaining a process performed by the information leak-preventing apparatus for causing a format error in an HDD by interrupting power supply of the HDD.

### DETAILED DESCRIPTION OF THE PREFERRED EMBODIMENTS

Exemplary embodiments of the present invention are explained in detail with reference to the accompanying drawings.

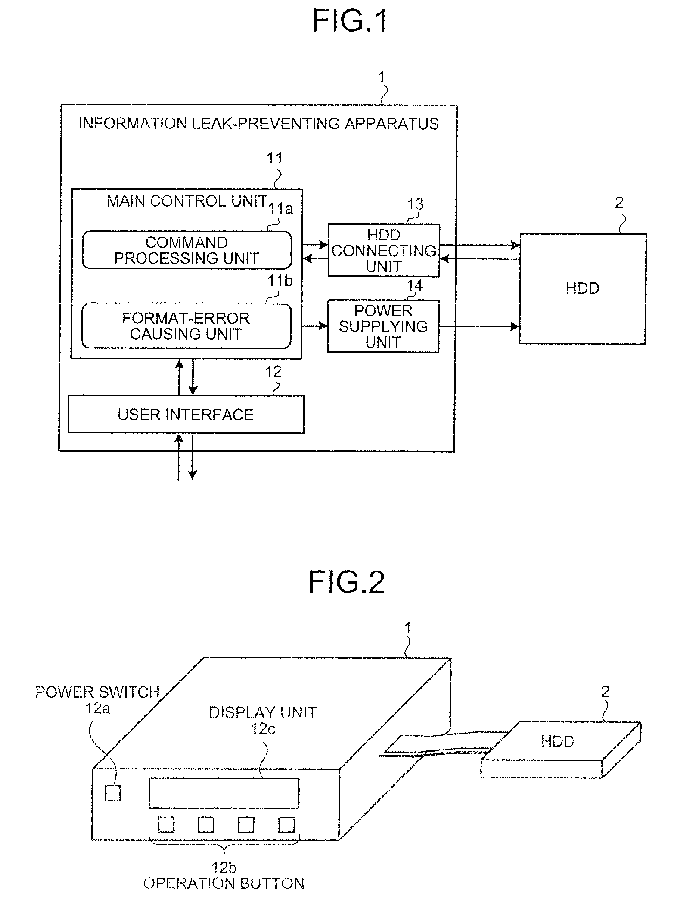

Fig. 1 is a schematic block diagram for explaining an outline and configuration of an information leak-preventing apparatus 1 according to an embodiment of the present invention. The information leak-preventing apparatus 1 is connected to a Hard Disk Drive (HDD) 2, and includes a main control unit 11, a user interface 12, a HDD connecting unit 13, and a power supplying unit 14.

The power supplying unit 14 supplies operating power to the HDD 2, and is physically connected to the HDD 2 with a power cable.

The main control unit 11 controls the entire information leak-preventing apparatus 1, and includes a command processing unit 11a and a format-error causing unit 11b. The command processing unit 11a performs a process of controlling operation of the HDD 2 by issuing a format command for format of the HDD 2, a reset command for interrupting a process of the HDD 2, a read command for reading data from the HDD 2, a write command for writing data to the HDD 2, based on the operation by a user.

The format-error causing unit 11b performs a process of causing a format error in the HDD 2. Specifically, after the format command is sent to the HDD 2 by the command processing unit 11a, the format-error causing unit 11b issues the reset command before the format of the HDD 2 is complete or stops the power supply for forcibly ending the formatting of the HDD 2.

If the format process is interrupted in such a manner, the HDD 2 stores therein information indicating that a format error has occurred, and rejects any read or write command that is issued thereafter. Then, the format process is executed again, and if the process is completed normally, it is possible to accept subsequent read or write command.

In other words, the information leak-preventing apparatus 1 intentionally causes a format error in the HDD 2, which makes the data in the HDD 2 unreadable. Specifically, the information leak-preventing apparatus 1 issues the reset command to the HDD 2 or interrupts the power supply of the HDD 2 after sending the format command to the HDD 2, to cause a format error in the HDD 2. Therefore, the user need not wait for the normal completion of formatting of the HDD 2, and it is possible to complete the task of data leak prevention in an extremely short period of time. Time required for such a task is of the order of a few minutes, and is not dependent on the capacity of the HDD 2.

Furthermore, once a format error occurs in the HDD 2, use of the HDD 2 for reading or writing of data is possible only when formatting is completed in a normal manner, which makes reading of recorded data through format process impossible, leading to prevention of leakage of information.

Moreover, the format command, the reset command, and the like are functions that are generally available in almost all the magnetic disk devices such as HDDs. Therefore, the present invention is applicable to any storage medium.

Some magnetic disks may not end formatting in an abnormal manner even when the formatting process is forcibly interrupted. Therefore, it is preferable to issue a read command to check that formatting has ended in an abnormal manner. If reading is possible, i.e., formatting has not ended in an abnormal manner, a format command can be reissued, complete process of formatting (normal completion) is executed, and an original data is deleted.

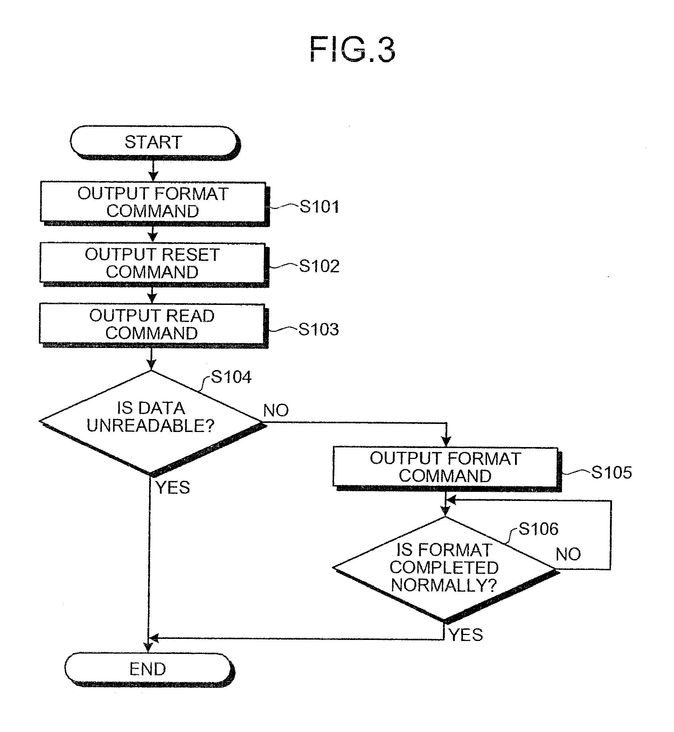

Process procedure performed by the information leak-preventing apparatus 1 in case of causing a format error in the HDD 2 by issuing a reset command to the HDD is shown in Fig. 3. First, the information leak-preventing apparatus 1 outputs a format command (step S101), and then outputs a reset command (step S102) to the HDD 2. As a result, the formatting of the HDD 2 starts and the formatting is reset thereby causing a format error in the HDD 2.

Subsequently, the information leak-preventing apparatus 1 outputs a read command (step S103) to the HDD 2, and confirms whether data is unreadable (step S104) from the HDD 2. If the data is unreadable (Yes at step S104), the information leak-preventing apparatus 1 ends the process at that point.

On the other hand, if the data is readable (No at step S104), the information leak-preventing apparatus 1 executes the format command (step S105), and waits until formatting of the HDD 2 is completed normally (step S106). When formatting is completed (Yes at step S106), the information leak-preventing apparatus 1 ends the process.

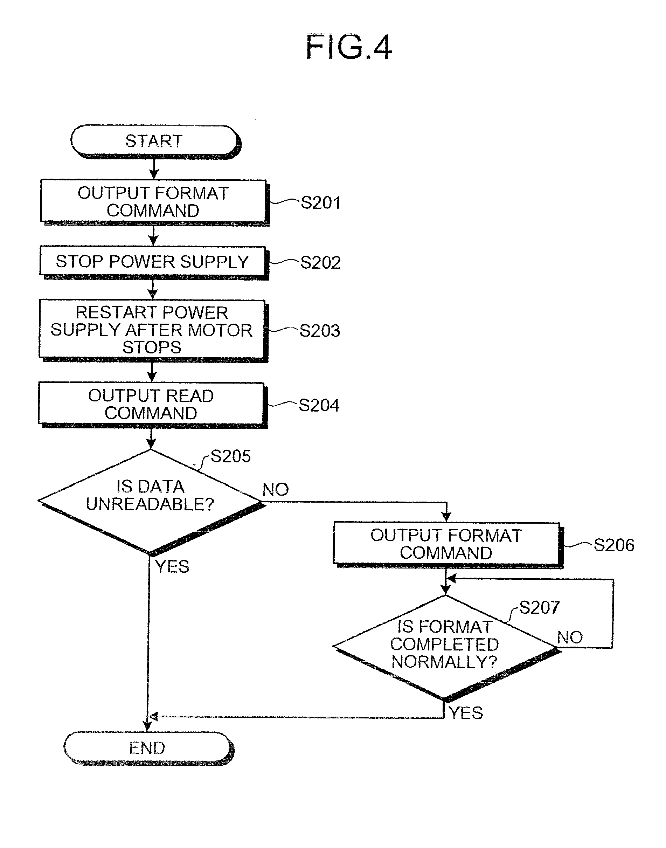

Process procedure performed by the information leak-preventing apparatus 1 in case of causing a format error in the HDD 2 by interrupting power supply of the HDD 2 is shown in Fig. 4. The information leak-preventing apparatus 1 outputs a format command (step S201) to the HDD 2, and stops the power supply (step S202). As a result, the formatting of the HDD 2 starts and the formatting is interrupted because a spindle motor of the HDD 2 stop due to the interruption in the power supply of the HDD 2 thereby causing a format error in the HDD 2.

The information leak-preventing apparatus 1 restarts the power supply to the HDD 2 (step S203). Subsequently, the information leak-preventing apparatus 1 outputs a read command (step S204) to the HDD 2, and confirms whether data is unreadable (step S205) from the HDD 2. If the data is unreadable (Yes at step 5205), the information leak-preventing apparatus 1 ends the process at that point.

On the other hand, if the data is readable (No at step S205), the information leak-preventing apparatus 1 outputs a format command (step S206) to the HDD 2, and waits until formatting of the HDD 2 is completed normally (step S207). When formatting of the HDD 2 is completed normally (Yes at step S207), the information leak-preventing apparatus 1 ends the process.

As explained above, the information leak-preventing apparatus 1 forcibly interrupts the formatting process of the HDD 2, and intentionally causes a format error in the HDD 2. Thus, it is possible to make data from the HDD 2 unreadable in a short period of time.

While the present invention has been described with reference to a few specific embodiments, the description is illustrative of the invention and is not to be construed as limiting the invention. The present invention can be arbitrarily changed or modified. For example, in the embodiment, a format error in the HDD 2 is caused by interrupting formatting of the HDD 2. However, if the storage medium can access data that indicates whether the format error occurs, it is possible to cause a format error in the storage medium by altering the data.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An information leak-preventing apparatus that prevents leakage of information from a storage medium, the information leak-preventing apparatus comprising:
a formatting unit that formats the storage medium; and
an error causing unit that causes a format error in the storage medium while the formatting unit is formatting the storage medium.

2. The information leak-preventing apparatus according to claim 1, wherein the error causing unit causes the format error by interrupting the formatting.

3. The information leak-preventing apparatus according to claim 1, wherein the error causing unit causes the format error by interrupting power supply to the storage medium.

4. The information leak-preventing apparatus according to any one of the preceding claims, further comprising a read checking unit that checks if it is possible to read data from the storage medium after the error causing unit has caused the format error, and wherein
the formatting unit is configured to retry formatting of the storage medium if the read checking unit determines it is possible to read data from the storage medium.

5. The information leak-preventing apparatus according to claim 1, wherein the storage medium is a hard disk drive, and
the formatting unit outputs a format command to the hard disk drive to start formatting of the storage medium, and the error causing unit outputs a reset command to the hard disk drive to cause the format error.

6. A method of preventing leakage of information from a storage medium, the method comprising:
formatting the storage medium; and
causing a format error in the storage medium while the storage medium in being formatted at the formatting.

7. The method according to claim 6, wherein the causing includes causing the format error by interrupting the formatting.

8. The method according to claim 6, wherein the causing includes causing the format error by interrupting power supply to the storage medium.

9. The method according to any one of the preceding claims, further comprising:
checking if it is possible to read data from the storage medium after the causing has caused the format error; and
retrying formatting of the storage medium if it is determined at the checking that it is possible to read data from the storage medium.
